(19)

Europäisches
Patentamt
European
Patent Office
Office européen
des brevets

(11) **EP 1 990 907 A2**

(12) **EUROPEAN PATENT APPLICATION**

(43) Date of publication:
**12.11.2008 Bulletin 2008/46**

(51) Int Cl.:
*H02P 8/38* (2006.01)    *H02P 21/14* (2006.01)
*H02P 8/34* (2006.01)

(21) Application number: **08425213.9**

(22) Date of filing: **02.04.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **04.04.2007  IT BG20070021**

(71) Applicant: **Rossini Giovanni
24050 Mozzanica (BG) (IT)**

(72) Inventor: **Rossini Giovanni
24050 Mozzanica (BG) (IT)**

(54) **Method of a closed loop control for a step motor, vector control based rotor position
determination, detection of a rotor stall condition and a rotor step out condition**

(57)    The invention relates to a method for a closed
loop control of a step motor drive. The angular position
of the rotor is determined by means of vector control.
Furthermore does the method enable the determination
of a step out failure, and as well the determination of a
stall condition. Unwanted effects of resonances typical
for step motors are minimized.

FIG 2

EP 1 990 907 A2

**Description**

The following invention is used to determine the position of a rotor in a step motor, the evaluation of the loss of the step, the stall of the motor and the possible closed loop control, with no need of additional Hardware..

Normally the position of the rotor is determined by installing on the motor, device called Encoder, Sincroresolver, etc; really delicate instrument which are sometime even more expensive than the motor itself.

With this invention, with the analysis of the data of the currents and the voltages applied on the motor, it is possible to know with good precision the position of the rotor!

There are other solutions already patent for this task.

The methods used are:

- Input in the phases of the motor of currents with much higher frequency than the working one; this has the inconvenience of being quite sensible to the background noise

- Analysis of the current's phase and the voltage's phase; involves the evaluation of the time derivatives, which is quite elaborate and delicate and sensible to the noise, and for this not reliable.

For the given reasons these solutions didn't find a practical use, remaining only theory.

The method we use considers currents and voltages data calculated at the rotor angular position.

These currents and voltages, which will be called $Id$= direct current , $Iq$= quadrature current , $Vd$= direct voltage , $Vq$= quadrature voltage, are stationary vectors rotating with the rotor, their analysis allows to evaluate the real position of the rotor in respect to the theoretical position.

We will describe the 3 main methods to pilot the motor driver, each one with 2 sub methods for the evaluation of the current and voltage variables.

At the end of this document there are 8 schemes to which we will refer for the descriptions.

**METHOD 1**

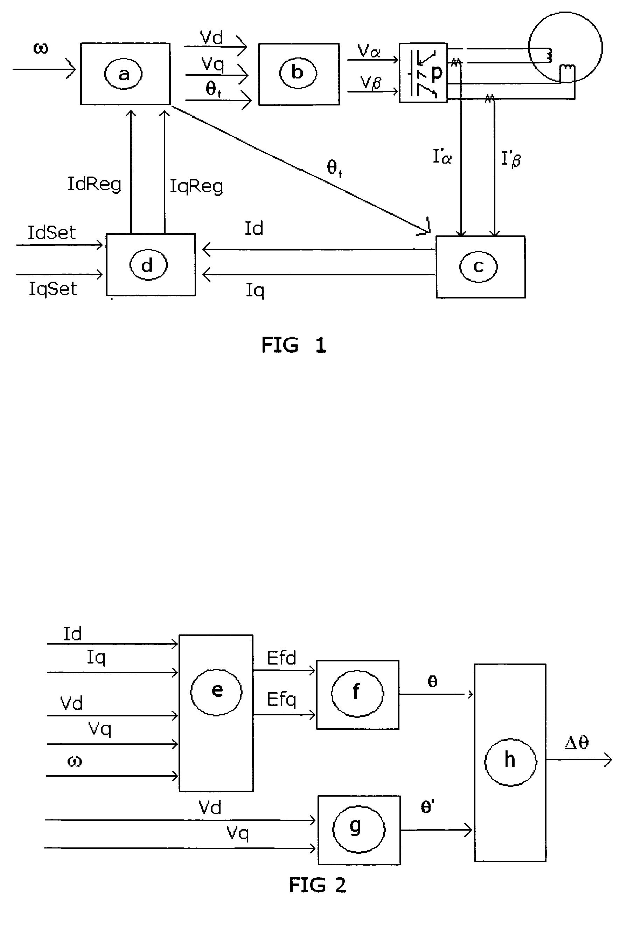

**Fig.1** shows the scheme of the used method for the computation of the variables $Id, Iq, Vd, Vq$; fundamental variables for the result of the real angular position of the rotor in respect to the theoretical value.

Using box (a) in **Fig.1** we compute the direct voltage and the quadrature voltage: in these equations we need the setted rotational speed $\omega$, the direct regulate current $IdReg$ and the quadrature regulate current $IqReg$:

$$(1) \, V_d = R_s * I_d^{REG} - X_l * I_q^{REG}$$

$$(2) \, V_q = R_s * I_q^{REG} - X_l * I_d^{REG} + K_e * \omega$$

$$(3) \, X_l = \omega * L_s$$

$$(4) \, \vartheta_t = \int \omega \, dt$$

The output variables are $Vd$ and $Vq$, direct voltage and quadrature voltage, and the electrical angle $\vartheta_t$ ..

$Rs, Ls$ and $Ke$ are in order: resistance, inductance and electromotive constant. These are the parameters of the motor and so fixed parameters in the computation of the voltages $Vd$ and $Vq$. $Xl$ represent the reactance of the motor.

After the calculation of the vector $\overline{V}$ ,having components $Vd$ and $Vq$, stationary in time, referred to the rotating system of the rotor, we input it in box (b) **Fig.1.** In this part we compute the inverse of Park transform using (5) and (6):

$$(5) \, V_\alpha = V_d * \cos(\vartheta_t) - V_q * \sin(\vartheta_t)$$

$$(6) V_{\beta} = V_d * \sin(\vartheta_t) + V_q * \cos(\vartheta_t)$$

In this case the input variables are *Vd, Vq* and the angle $\vartheta_t$, while the output variables are the 2 phase voltages, $V_{\alpha}$ and $V_{\beta}$, which will then be sent to the power amplifier (p).

Afterward we detect the respective input phases in the motor, $I^1_{\alpha}$ and $I^1_{\beta}$, which will be sent to box (c) Fig. 1 which compute the Park transform using (7) and (8):

$$(7) I_d = I^1_{\alpha} * \cos(\vartheta) + I^1_{\beta} * \sin(\vartheta)$$

$$(8) I_q = I^1_{\alpha} * \sin(\vartheta) + I^1_{\beta} * \cos(\vartheta)$$

The output of this block are the phase currents rotated in the reference system of the rotor and we will call them *Id* and *Iq,* direct current and quadrature current.

These values will be in much more disagreement with *IdSet* and *IqSet* the more the rotor position is shifted in respect to the theoretical value.

*IdSet* = motor's rated direct current

*IqSet* = motor's rated quadrature current, we set it to zero.

Once we have *Id* and *Iq* we use them in box (d) **Fig.1** with function F (proportional, integrator, derivative), which computes the direct regulate current *IdReg* using the difference between the set direct current and measured direct current as output from the motor.

$$I^{REG}_d = f(I^{SET}_d, I_d)$$
$$f() = PID \qquad 65$$

The same process is applied on *Iq,* obtaining *IqReg.*

The obtained currents and voltages are sent to box (e) **Fig.2.**

In this box we compute the "direct electromotive voltage" and the "quadrature electromotive voltage" : *Efd* and *Efq:*

$$(9) Ef_d = V_d - (R_s * I_d + L_s * I^{REG}_d - \omega_R * L_l * I_q)$$

$$(10) Ef_q = V_q - (R_s * I_q + L_s * I^{REG}_q - \omega_R * L_l * I_d)$$

These equation are valid in a stationary regime: with constant o slowly changing values of *Id, Iq* and $\omega$,.

Box (f) **Fig.2** with input *Efd* and *Efq,* gives as result the shifted angle of the rotor in respect to the theoretical angle of the electric field given by (12):

$$(12) \quad \vartheta = arctg \frac{Ef_d}{Ef_q}$$

Box (g) **Fig.2** computes with (13) the value of the theoretical angle of the stationary vector $\overline{V}$ using $Vd$ and $Vq$ (equations (1) and (2)):

$$(13) \quad \vartheta' = arctg \frac{V_d}{V_q}$$

Finally, box (h) **Fig.2** returns an angular difference $\vartheta$ and $\vartheta'$ between the real position of the rotor and the voltage vector forced by the action of function PID. This angle $\Delta\vartheta$ is important because in synchronous motor, as the step motor, the loss of synchro between rotor and rotatin field takes place when $\Delta\vartheta$ is bigger than $\vartheta_{MAX}$ or less than $-\vartheta_{MAX}$; in theory $\vartheta_{MAX}$ =90°. Furthermore, using the value $\Delta\vartheta$ we can perform a control action with no need of further tools, as the Encoder, which gives the real position of the rotor.

Instead of the reference system, rotating with the rotor with vectors $Vd, Vq, Id, Iq,$ we can use another system rotating with the rotor but with elements $\overline{V}, \overline{I}, \vartheta_V, \vartheta_i$. With trigonometric transformation in these systems we can obtain the same results described previously.

In the further descriptions we arrive at the same results but using different acquisitions methods of the variables.

## METHOD 1 (b)

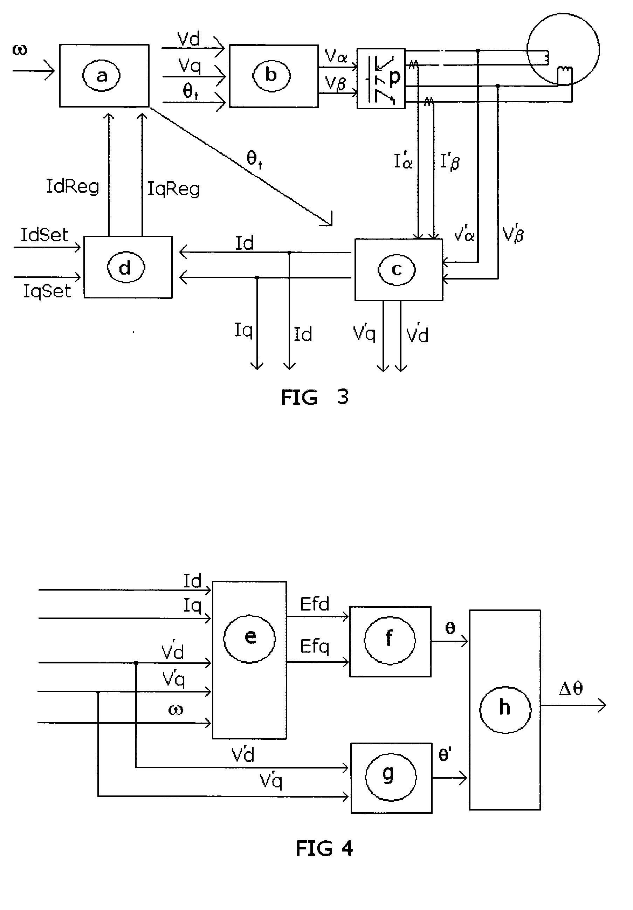

**Fig.3** shows the box scheme of the method used to calculate $Id, Iq, Vd, Vq, V'd, V'q.$

In **Fig.3** boxes (a) (b) and (c) have the same role as in **Fig.1.**

In box (c) **Fig.3** we compute not only Park transform of the currents, as in **Fig.1,** but also of the voltages $V_\alpha^1$ and $V_\beta^1$, extracted as output of the step motor.

The output of box (c) **Fig.3** are $Id, Iq, V'd, V'q.$

In **Fig.4** boxes (e) (f) (g) and (h) have the same role as in **Fig.2**. The input here are not the computed voltages given by (a), but the measured voltages which, delivered by the power amplifier (p), comes out of box (c).

## METHOD 2

**Fig.5** shows a scheme of the method used to compute the variables $Id, Iq, Vd, Vq,$ using the retroaction of a PID on the phase currents.

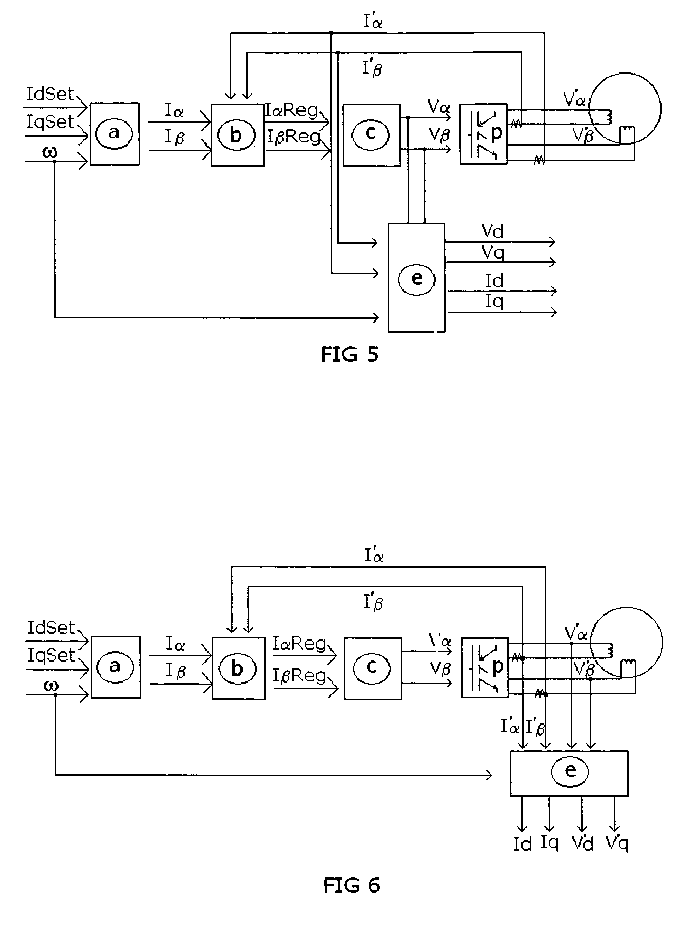

Box (a) **Fig.5** applies the Park inverse transform to the currents $IdSet$ and $IqSet$ using the angle $\vartheta_t$, given by equation (4). We obtain $I_\alpha$ e $I_\beta$ : the theoretical phase currents.

In box (b) we use $I_\alpha$, $I_\beta$, and $I_\alpha^1, I_\beta^1$ that are the phase currents output of the power amplifier (p). Box (b) gives $I\alpha$ Re $g$ and $I\beta$ Re $g$ : the phase currents alpha and beta given by the PID.

In (c) **Fig.5** we obtain $V_\alpha$ and $V_\beta$ using $I\alpha$ Re $g$ and $I\beta$ Re $g$ in equations (14) and (15):

$$(14) \quad V_\alpha = R_s * I_\alpha + L_s \frac{dI_\alpha}{dt} + k_e * \omega$$

$$(15) V_\beta = R_s * I_\beta + L_s \frac{d I_\beta}{dt} + k_e * \omega$$

We use these voltages in the power amplifier (p) and in box (e) **Fig.5.**

Box (p)is directly linked to the motor, box (e) transforms $V_\alpha$, $V_\beta$, $I_\alpha^1$ , $I_\beta^1$ through Park transform in *Vd, Vq,*
*Id, Iq.*

Now these variables can be used to compute $\Delta\vartheta$ as in **Fig.2.**

**METHOD 2 (b)**

**Fig.6** shows the scheme used to compute *Id Iq, V'd, V'q* using the retroaction on the phase currents given by
a PID.

The logical operation of **Fig.6** is the same as of **Fig.5,** only using different output to obtain $\Delta\vartheta$. Here we use

the Park transform on the voltages input to the motor $V_\alpha^1$ and $V_\beta^1$ to obtain *V'd* and *V'q,* instead of using the computed

voltages $V_\alpha$ and $V_\beta$. We use then the scheme in **Fig.4** to compute $\Delta\vartheta$.

**METHOD 3**

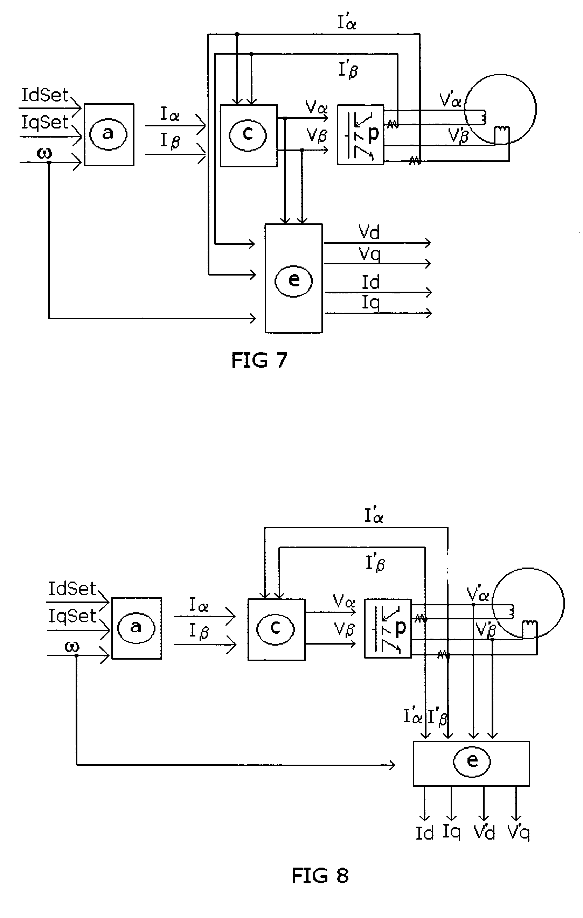

**Fig. 7** shows the method used to compute *Id, Iq, Vd, Vq* using a voltage switch which compares the theoretical
phase currents and the phase currents as output from the amplifier (p).

Also here, as in **Fig.5,** box (a) applies the inverse Park transform to the currents *IdSet* and *IqSet* using the
angle $\vartheta_t$ given by equation (4).

$I_\alpha$ e $I_\beta$ calculated by box (a) **Fig.7** are transformed in box (c) by a voltage switch, following equations (16) and (17):

$$(16) \begin{cases} I_\alpha^1 > I_\alpha \Rightarrow V_\alpha = 0 \\ I_\alpha^1 < I_\alpha \Rightarrow V_\alpha = V_{MAX} \end{cases}$$

$$(17) \begin{cases} I_\beta^1 > I_\beta \Rightarrow V_\beta = 0 \\ I_\beta^1 < I_\beta \Rightarrow V_\beta = V_{MAX} \end{cases}$$

$I_\alpha^1$ , $I_\beta^1$ = currents detected as output of the power amplifier (p).

$V_\alpha$ and $V_\beta$, are then sent to the power amplifier (p) and to box (e) **Fig.7.**

Box (p) is linked directly to the motor while box (e) receives both $V_\alpha$, $V_\beta$ and $I_\alpha^1$ , $I_\beta^1$ and using the Park transform gives the results of *Vd, Vq, Id, Iq.*

At this point we can use *Vd, Vq, Id, Iq* to compute $\Delta\vartheta$ using the scheme in **Fig.2** as previously described.

**METHOD 3 (b)**

**Fig.8** shows the method to compute *Id, Iq, V'd, V'q* using a voltage switch which compares the theoretical
phase currents and the phase currents exiting the power amplifier (p).

The logical operation of **Fig.8** is the same as of **Fig.7,** only using different output to obtain $\Delta\vartheta$. Here we use the Park transform on the voltages input to the motor $V^1_\alpha$ and $V^1_\beta$ to obtain $V'd$ and $V'q$, instead of using the computed voltages $V_\alpha$ and $V_\beta$. We use then the scheme in **Fig.4** to compute $\Delta\vartheta$.

## APPLICATION 1

With the data of the angle $\Delta\vartheta$. it is possible to derive the step loss of the motor using (18):

$$(18) \quad (\Delta\vartheta > \vartheta_{MAX}) \vee (\Delta\vartheta < -\vartheta_{MAX}) \Rightarrow step\_loss$$

## APPLICATION 2

With the data of the angle $\Delta\vartheta$.it is possible to derive the stall of the motor using equation (19):

$$(19) \quad (\Delta\vartheta > \vartheta_{MAX}) \vee (\Delta\vartheta < -\vartheta_{MAX}) \Rightarrow stall$$

## APPLICATION 3

With the data of the angle it is possible to increase the torque of the motor rising the current based on the load and so on the base of the angle $\Delta\vartheta$ following equations (20) and (21):

$$(20) \quad I^{REG}_d = f(I^{SET}_d, \Delta\vartheta)$$

$$(21) \quad I^{REG}_q = f(I^{SET}_q, \Delta\vartheta)$$

$f() = PID$

The detected values of currents and voltages are normally filtered with a low-pass filter to avoid irregularities in the acquisitions of the data due to the background noise and perturbations due discretization.

## Claims

1. The method to evaluate the angular position of the rotor in respect to the theoretical set value, as described in **Fig. 2,** both with the use of the data *Id, Iq, Vd, Vq* in the Cartesian system and with the use of the stationary *vectors* $\overline{V}, \overline{I}, \vartheta_V, \vartheta_I$.

2. The method of controlling the motor which uses *Id, Iq, Vd, Vq* as in **Fig.1** and **Fig.3,** to decrease both the resonance phenomenon of the step motor and to decrease the higher orders harmonic, reasons for the warming up of the metallic part of the motor.

3. The possibility to detect the loss of step of the motor using $\Delta\vartheta$. (Application 1)

4. The possibility to detect the stall of the motor (Application 2)

5. The possibility to increase the torque of the motor in proportion to the delay of the angle of the rotor. (Application 3)

**6.** Use of Method 1 and Method 1 (b) to compute $Id, Iq, Vd, Vq.$ (Fig.1, Fig.3)

**7.** Use of Method 2 and Method 2 (b) to compute $Id, Iq, Vd, Vq, V'd, V'q.$ (Fig.1, Fig.3)

**8.** Use of Method 3 and Method 3 (b) to compute $Id, Iq, Vd, Vq, V'd, V'q.$ (Fig.1, Fig.3)

**FIG 1**

**FIG 2**

FIG 3

FIG 4

FIG 5

FIG 6

FIG 7

FIG 8